# EUROPÄISCHE PATENTSCHRIFT

(11) **EP 3 335 666 B1**
(45) Veröffentlichungstag und Bekanntmachung des Hinweises auf die Patenterteilung: **10.03.2021**
(21) Anmeldenummer: 16204291.5
(22) Anmeldetag: 15.12.2016
(51) Int. Cl.: A61C 8/00

(54) **VORRICHTUNG ZUM HALTEN EINER ANORDNUNG AUS SUPRASTRUKTUR UND ABUTMENT**
DEVICE FOR HOLDING AN ARRANGEMENT MADE OF A SUPERSTRUCTURE AND ABUTMENT
DISPOSITIF DE RETENUE D'UN SYSTÈME COMPRENANT UNE SUPRASTRUCTURE ET UNE BUTÉE

(43) Veröffentlichungstag der Anmeldung: 20.06.2018
(73) Patentinhaber: Ivoclar Vivadent AG, 9494 Schaan (LI)
(72) Erfinder: Burger, Goran, 9472 Grabs (CH)
(74) Vertreter: Baronetzky, Klaus

(56) Entgegenhaltungen:
- WO-A1-2004/080328
- WO-A1-2015/120954
- CA-A- 243 548
- CH-A- 388 218
- DE-A1-102006 036 715
- US-A1- 2014 154 643
- US-A1- 2014 205 969

## Beschreibung

Die Erfindung betrifft eine Vorrichtung zum Halten einer Anordnung aus Suprastruktur und Abutment, gemäß dem Oberbegriff von Anspruch 1, sowie ein zugehöriges Verfahren gemäß dem Oberbegriff von Anspruch 14.

Seit langem ist es bekannt, für die Bereitstellung der Verbindung zwischen einem Implantat eines Dentalrestaurationsteils und der Suprastruktur ein sogenanntes Abutment als Zwischenkörper zu verwenden.

Derartige Lösungen sind seit langem bekannt; lediglich beispielhaft sei hier auf die US 4,657,510 A1 verwiesen.

Typischerweise erfolgt der Aubau so, dass das Implantat in an sich bekannter Weise im Knochen des Patienten verankert wird. In bzw. an diesem wird ein Abutment befestigt, typischerweise über eine sogenannte Implantatschraube, die das Abutment durchtritt. Das Abutment bildet insofern eine sicher verankerte Basis für die Aufnahme der Suprasturktur.

Um diese zu befestigen, ist der Abutmenthals und der Abutmentkragen typischerweise so ausgebildet, dass zum einen ein harmonischer Übergang Implantat/Abutment/ Suprastruktur sichergestellt ist, und zum anderen die auf die Suprastruktur wirkende Kaukräfte sicher aufgenommen und verteilt werden können.

Um dies zu bewerkstelligen, ist diese Struktur typischerweise formschlüssig mit dem Abutment, speziell dem Abutmenthals, verbunden, und zwar über einen speziellen Dentalzement wie zum Beispiel "Multilink Hybrid Abutment" der Firma Ivoclar Vivadent AG. Bei der Wahl dieses Klebstoffes wird besonders darauf geachtet, dass die Haftung sowohl an Titan als einem Material, aus dem ein Abutment häufig hergestellt wird, als auch an einer Keramik oder einem Komposit, als einem Material, das für die Suprastruktur verwendet wird, besonders gut ist.

Ferner sollten bei der Aushärtung die Einflüsse von Feuchtigkeit wie Speichel und allgemein die Wasserlöslichkeit und die Wasseraufnahme des Klebstoffes oder Zahnzement besonders gering sein.

Ein weiterer Gesichtspunkt ist die Biokompatibilität, so dass die Hersteller derartiger Klebstoffe insgesamt große Aufmerksamkeit an die Bereitstellung dieser Zemente oder Kleber gelegt haben.

Für die Durchführung des Klebeschritts sind im Grunde zwei Verfahren möglich: Zum einen ist es möglich, den Klebstoff innen auf die Suprastruktur aufzubringen und diese dann auf das Abutment aufzudrücken. Hierbei lässt sich jedoch der Klebevorgang selbst nur in sehr geringem Maße beeinflussen, so dass typischerweise die Klebeverbindung zwischen Abutment, und Suprastruktur - bei Einbringen der Implantatschraube - vorab vorgenommen wird.

Beispielsweise spannt der Zahnarzt oder Zahntechniker das Abutment gegebenenfalls auch unter Verwendung eines anderen Implantats oder eines Implantatanalogs. Insbesondere spannt er das Abutment dort mit einer Schraube ein bzw. fügt das Abutment dort ein und fixiert es. Dann bringt er den Klebstoff auf und führt daraufhin den Klebevorgang nach den Spezifikationen der Hersteller durch, indem er die Suprastruktur auf das Abutment, speziell also den Abutmenthals aufdrückt und aufschiebt.

Alternativ kann das Abutment mit einer Verdrehsicherung auch ohne Schraube auf dem Implantat aufgesetzt und dort festgehalten werden.

Die Zugänglichkeit der Implantatschraube ist durch eine Durchtrittsausnehmung in der Okklusalfläche der Suprastruktur gegeben. Nach Auftragung des Klebstoffes wird dann das Abutment mit einer bereits auf dieser fixierten Suprastruktur über die Implantatschraube an dem bereits implantierten Implantat fixiert.

Diese jahrzehntelang praktizierte Abfolge der Herstellung einer Dentalrestauration bringt jedoch immer wieder Probleme mit sich, die teilweise zu Haftungsfällen führt: Trotz versuchter Einhaltung der Herstellerspezifikationen löst sich manchmal die Suprastrukur vom Abutment, so dass die Gefahr besteht, dass die Suprastruktur verschluckt werden kann.

Auch muss in nahezu der Hälfte der Fälle eine recht aufwändige Nacharbeit vorgenommen werden, um okklusale Fehlstellungen zu korrigieren, und teilweise muss auch zusätzliches Material aufgebracht werden, das dann verlustgefährdet ist.

Daher ist es vorgeschlagen, beim Kleben die Suprastruktur und das Abutment unter einer Vorspannung zu halten. Dieser Vorschlag führt zwar zu gewissen Verbesserungen, ohne dass die Probleme vollständig vermieden werden konnten.

Eine Vorrichtung mit einer Spannvorrichtung, geeignet zum Halten von Bauteilen, ist aus CH 388 218 A bekannt.

Daher liegt der Erfindung die Aufgabe zu Grunde, eine Vorrichtung zum Halten einer Anordnung aus Suprastruktur und Abutments gemäß dem Oberbegriff von Anspruch 1 zu schaffen, die störunanfälliger ist und die Bearbeitungsabläufe bei der Bereitstellung der Dentalrestauration optimiert.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, für die Montage von Suprastruktur und Abutment eine Spannvorrichtung einzusetzen, die mit einer Hilfsvorrichtung zusammen wirkt. Die Hilfsvorrichtung weist eine Höheneinstellungsmöglichkeit, wie ein Gewinde, eine Rastung oder eine beliebige andere Höheneinstellungsmöglichkeit auf, über welche die relative Höhe zwischen dem Hilfselement und der Spannvorrichtung einstellbar ist.

Erfindungsgemäß ist es dadurch vorgesehen, dass nicht nur durch die Spannvorrichtung ein bestimmter Klebedruck auf die Klebefuge zwischen Abutment und Suprastruktur ausgeübt wird, sondern dass über die Höheneinstellung dieser Klebedruck exakt einstellbar ist.

Bevorzugt ist das zugehörige Gewinde für die Höheneinstellung ein Feingewinde und die Hilfsvorrichtung und/oder die Spannvorrichtung sind so elastisch ausgebildet, dass sie eine Federkennlinie aufweisen, die für die Bereitstellung des gewünschten Klebedrucks geeignet ist.

Beispielsweise kann die Hilfsvorrichtung der Suprastruktur zugeordnet sein. Erfindungsgemäß weist die Hilfsvorrichtung Vertiefungen auf, in welche okklusale Vorsprünge wie Höcker oder Schneidekanten der Suprastruktur eintreten können. Die Hilfsvorrichtung kann dann wie eine Art elastische Zylinderscheibe mit Vertiefungen ausgebildet sein, die von Zugelementen oder einem Teil der Spannvorrichtung übergriffen wird und einen genau einstellbaren Druck als Klebedruck ausübt.

Die Hilfsvorrichtung gewährleistet des Weiteren ein lagegetreues Einspannen der Restauration bzw. Suprastruktur in der erfindungsgemäßen Vorrichtung.

In einer bevorzugten Ausführungsform ist es vorgesehen, dass basierend auf den CAD-Daten der Suprastrutur per eine CAM-Vorrichtung die Vertiefungen der Hilfsvorrichtung ausgefräst werden. In diesem Fall kann die Zylinderscheibe als Hilfsvorrichtung aus festem Material wie beispielsweise PMMA bestehen.

In einem Ausführungsbeispiel sind demnach hierfür bestimmte Zugelemente Teil der Hilfsvorrichtung, und der Gewindeeingriff besteht zwischen diesen und der Spannvorrichtung. Es ist auch möglich, die Spannvorrichtung anstelle dessen zweigeteilt auszubilden, so dass ein Teil der Spannvorrichtung gegenüber einem anderen Teil der Spannvorrichtung höheneinstellbar ist. Die Zugkräfte, die auf die Hilfsvorrichtung zum Andruck der Suprastruktur an das Abutment übertragen werden müssen, werden dann durch Zugelemente als Teil der Spannvorrichtung übertragen.

Insofern wird unabhängig von der Ausgestaltung die Anordnung aus Suprastruktur und Abutment zwischen Hilfsvorrichtung und Spannvorrichtung eingespannt haltbar. Hier sei unter eingespannt zu verstehen, dass die Hilfsvorrichtung oder die Spannvorrichtung gleichsam von oben auf die Suprastruktur drückt, und die betreffende andere Vorrichtung von unten auf das Abutment. Es versteht sich, dass diese Betrachtung vorranging bei Dentalrestaurationen für den Unterkiefer bestimmt ist, während bei Dentalrestaurationen für dien Oberkiefer die Lage von oben und unten je umgekehrt ist.

Es ist aber auch möglich, die Hilfsvorrichtung auf das Abutment wirken zu lassen, und die Spannvorrichtung auf die Suprastruktur.

Wesentlich ist nur der Druck der betreffenden Teile aufeinander, zur einstellbaren Bereitstellung des Klebedrucks.

In überraschend einfacher Weise lässt sich der erwünschte Klebedruck beispielsweise auch mit einem Drehmomentschlüssel einstellen, der auf einen Imbusanschluss in der Spannvorrichtung wirkt. Das so vorgegebene Drehmoment ist proportional dem gewünschten Klebedruck, zumindest in Bereichen, in denen der Klebespalt ein vorgegebenes Maß wie beispielsweise von 20 bis 150 µm, insbesondere 50 µm, nicht unterschreitet.

Erfindungsgemäß besonders günstig ist es, dass durch die symmetrisch zur Mittenachse des Abutments realisierte Richtung, in der der Anpressdruck aufgebaut wird, der Klebespalt vergleichmäßigt wird. Ein schiefes Andrücken, das dazu führen würde, dass der Klebespalt an einer Stelle zu gering ist und an einer weiteren Stelle zu breit, wird damit sicher vermieden.

Im Fall von Molaren können hierzu beispielsweise im Bereich der Hilfsvorrichtung Ausnehmungen bzw. Vertiefungen vorgesehen sein, die die Höcker des betreffenden Molars formschlüssig aufnehmen können. Die Hilfsvorrichtung ist hierzu bevorzugt elastisch, so dass sich die Suprastruktur mit der Okklusionsfläche zusätzlich zu der Vertiefung dort eindrücken kann.

In vorteilhafter Ausgestaltung ist die Hilfsvorrichtung als auswechselbare Scheibe vorgesehen, die auf einer Seite eine Vertiefung für Schneidezähne bzw. Eckzähne aufweist und auf der anderen Seite eine Doppelvertiefung für Molare.

Die Hilfsvorrichtung kann dann bevorzugt von dem Zugelement oder den Zugelementen übergriffen werden, so dass der erwünschte Druck auf die Kombination von Suprastruktur und Abutment ausgeübt wird.

Der Abutmenthals ist typscherweise in seiner Länge an die Höhe der Suprastruktur angepasst. Hier hat es sich als besonders günstig herausgestellt, den Abutmenthals in drei vorgegebenen Längen vorzusehen, also klein, mittel und groß, um eine sichere Führung zu erlauben.

Die Suprastruktur wird stets so hergestellt, dass sie gegenüber dem Außendurchmesser des Abutmenthalses ein Übermaß hat, das dem gewünschten Klebespalt entspricht. Beispielhaft sei hier eine Klebespaltbreite von 150 µm angenommen.

Im Bereich des Abutmentkragens soll jedoch ebenfalls ein Klebespalt vorliegen, dessen Größe bevorzugt der Stärke des Hals-Klebespalts entspricht, aber auch größer oder kleiner gewählt werden kann. Dieser Klebespalt lässt sich nun erfindungsgemäß einstellen, indem mit der Hilfsvorrichtung eine Höheneinstellung der Relativposition von Abutment und Suprastruktur vorgenommen wird.

Je größer der Anpressdruck durch die Hilfsvorrichtung und die Spannvorrichtung auf die Kombination von Suprastruktur und Abutment ist, desto geringer wird der Klebespalt an den diesbezüglichen Axialflächen des Abutments.

Mit Axialflächen seien hier die Flächen gemeint, deren Flächennormale sich achsparallel zum Abutment, oder schräg zur Abutmentachse erstrecken, aber jedenfalls nicht radial.

Abgesehen von den insofern axialen Klebeflächen wird erfindungsgemäß auch die radiale Klebefläche am Abutmenthals vergleichmäßigt: dies liegt offenbar darin begründet, dass durch die Vertiefungen in der Hilfsvorrichtung, die über die Zugelemente mit der Spannvorrichtung formschlüssig verbunden ist, eine Zentrierung erfolgt. Dies geschieht zum einen durch die Nachgebigkeit und zum anderen durch die geschickte Wahl der Anordnung der betreffenden Vertiefungen.

In einer modifizierten Ausgestaltung ist es vorgesehen, die ohnehin per CAD, also in digitaler Form, vorliegende Oberflächenform der Suprastruktur an der Okklusalseite als Negativform in die Hilfsvorrichtung einzuformen. Hierdurch lässt sich ein exakter Formschluss zwischen der Hilfsvorrichtung und der Suprastruktur gewährleisten, der eine noch bessere Zentrierung und Vergleichmäßigung des radialen Klebespalts ermöglicht.

In diesem Fall kann die Hilfsvorrichtung aus festem Material wie PMMA bestehen.

Weitere Vorteile, Gesichtspunkte und Merkmale ergeben sich aus der nachfolgenden Beschreibung eines Ausführungsbeispiels der Erfindung anhand der Zeichnung.

Es zeigen:
- Fig. 1: eine schematisch dargestellte Ausführungsform der erfindungsgemäßen Vorrichtung zum Halten einer Anordnung aus Suprastruktur und Abutment;
- Fig. 2: eine Anordnung mit einem teilweise dargestellten Abutment und einer Spannvorrichtung einer weiteren Ausführungsform der erfindungsgemäßen Vorrichtung in Draufsicht und in Seitenansicht; und
- Fig. 3: ein Blockdiagramm für die Herstellung der erfindungsgemäßen Vorrichtung und den Klebeprozess.

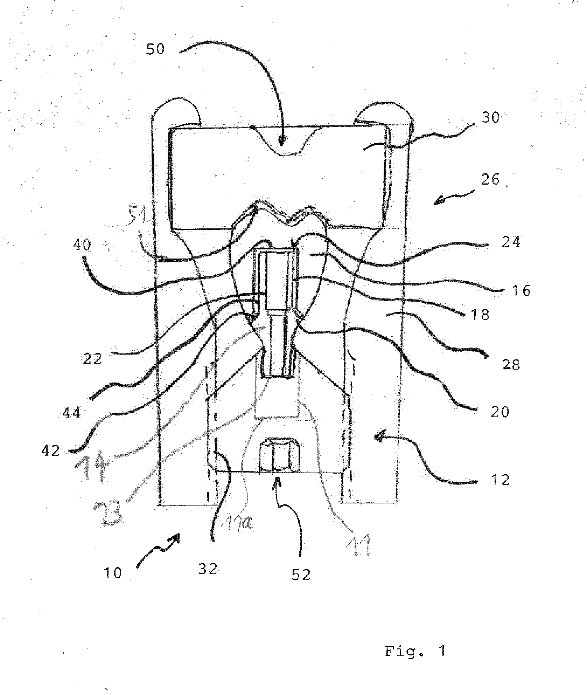

Die in Fig. 1 dargestellte Ausführungsform der erfindungsgemäßen Vorrichtung 10 weist eine Spannvorrichtung 12 auf. In die Spannvorrichtung 12 ist ein Abutment 14, das nicht Teil der erfindungsgemäßen Vorrichtung ist, eingesetzt, und zwar formschlüssig an einem implantatnahen Bereich des Abutments.

Die Spannvorrichtung 12 weist eine Abutmentschnittstellenaufnahme 13 auf, die insbesondere sacklochförmig ist und die Geometrie einer Verdrehsicherung für das Abutment 14 aufweist. Dadurch wird ermöglicht, dass die erfindungsgemäße Vorrichtung 10 lediglich für das vorgegebene Abutmentsystem bzw. Implantatsystem, aber nicht für andere unterschiedliche Abutmentsysteme bzw. Implantatsysteme verwendet werden kann.

Die Spannvorrichtung 12 weist zudem ein Interface 11 für das Abutment 14 auf, via welches Interface das Abutment 14 an die Spannvorrichtung 13 angeschlossen ist. Die Basisfläche 11a des Interfaces 11 kann in Form eines Sechskantes sein.

Auf das Abutment 14 ist in an sich bekannter Weise eine Suprastruktur 16 aufgesetzt, die ebenfalls nicht Teil der erfindungsgemäßen Vorrichtung ist.

Abutment und Suprastruktur sollen unter Verbindung eines geeigneten Klebestoffs miteinander verklebt werden. Hierzu ist ein Klebesplalt 18 ausgebildet, der sich ausgehend von einem Abutmentkragen 20 entlang eines Abutmenthalses 22 bis zu einer Abutmentstirnfläche 24 erstreckt und mit einem an sich bekannten Zahnzement oder Zahnkleber gefüllt ist. Als Zahnkleber hat sich die Verwendung von Vivaglas CEM PL oder von Multilink Hybrid Abutment, je der vorliegenden Anmelderin, als besonders günstig herausgestellt.

Andere Zahnzemente sind jedoch für die erfindungsgemäße Verwendung nicht ausgeschlossen.

Im nichtausgehärteten Zustand ist der Zahnzement viskos, wobei die Viskosität je nach Zahnzement, aber auch je nach den Umgebungsbedingungen wie der Temperatur, unterschiedlich ist.

Erfindungsgemäß weisst die Vorrichtung 10 neben der Spannvorrichtung auch eine Hilfsvorrichtung 26 auf. Diese besteht in dem dargestellten Ausführungsbeispiel aus einem Zugelement 28 und einer Scheibe 30. Das Zugelement 28 übergreift die Scheibe, so dass die Scheibe in der Lage ist, Druck in Richtung Suprastruktur auszuüben, letztlich also in Richtung der Spannvorrichtung 12.

Erfindungsgemäß ist nun eine Höheneinstellvorrichtung 32 zwischen Spannvorrichtung 12 und Hilfsvorrichtung 26 vorgesehen, im dargestellten Ausführungsbeispiel zwischen der Spannvorrichtung 12 und dem Zugelement 28. Diese kann beispielsweise als Feingewinde ausgebildet sein, wobei es aber auch möglich ist, einen beliebigen anderen einstellbaren Formschluss bereitzustellen, beispielsweise eine Feinrastung.

Erfindungsgemäß erfolgt die Einstellung so, dass eine Höhenlage zwischen der Unterseite der Scheibe 30 und der Oberseite der Spannvorrichtung 12 vorgegeben wird. Diese entspricht der erwünschten Dicke des Klebespaltes 18, genauer gesagt, der axialen Klebespalte 40 und 42. Für die Bestimmung der vorgegebenen Höhenlage muss die Geometrie der Scheibe 30 und der maximale axiale Verfahrweg der Höheneinstellvorrichtung 32 berücksichtigt werden.

Der axiale Klebespalt 40 erstreckt sich an der Abutment-Stirnfläche 24 und der axiale Klebespalt 42 erstreckt sich an dem Abutment-Kragen 20.

Demgegenüber erstreckt sich ein radialer Klebespalt 44 an dem Abutment-Hals 22.

In der Scheibe 30 als Teil der Hilfsvorrichtung 26 sind erfindungsgemäß Vertiefungen 50 ausgebildet. Bevorzugt ist an der Unterseite der Scheibe 30 eine Doppelvertiefung 51 für Molare ausgebildet, und an der Oberseite der Scheibe 30 ein Einfachvertiefung 50 für Schneidezähne oder Eckzähne. Je nach der zu verklebenden Suprastruktur 16 wird die Scheibe 30 in der in der Figur dargestellten Position belassen oder umgedreht.

Die Scheibe 30 könnte auch als Block bezeichnet werden, und die Außenform dieser ist nicht auf die dargestellte Ausgestaltung gemäß der Figur beschränkt; es ist sowohl eine runde oder eine eckige Ausgestaltung des Blocks 30 möglich, ohne den Bereich der Erfindung zu verlassen.

In vorteilhafter Ausgestaltung ist die Hilfsvorrichtung 26 zweiteilig und insbesondere im Bereich des flachzylindrischen Blocks 30 und/oder des Zugelementes 28 elastisch oder nachgiebig. Durch die Nachgiebigkeit lässt sich zusätzlich der erwünschte Klebedruck einstellen, entsprechend der auf den Klebespalt einwirkenden Kraft zwischen Suprastruktur 16 und Abutment 14.

In vorteilhafter Ausgestaltung ist es vorgesehen, das Zugelement 28 mit einer transparenten Hülle bzw. Hülse oder mit Streben auszubilden, insbesondere mit 2 Streben, bevorzugt mit 3 Streben, die die Scheibe 30 tripodisiert lagern. Dies ermöglicht die freie Sichtbarkeit des axialen Klebespalts 42 auf das gingivale Ende der Suprastruktur 16.

In dem dargestellten Ausführungsbeispiel weist die Spannvorrichtung 12 an ihrer radialen Außenseite ein Feingewinde auf, das mit einem entsprechenden Innen-Feingewinde der Hilfsvorrichtung 26 in Eingriff steht.

Für die Höheneinstellung lässt sich die Spannvorrichtung 12 dementsprechend gegenüber der Hilfsvorrichtung 26 verdrehen. Hierzu ist eine sechseckige Ausnehmung 52 zentral in der Spannvorrichtung 12 ausgebildet. Diese ist in an sich bekannter Weise für den Eingriff eines Inbusschlüssels geeignet.

Die Höheneinstellung kann nun bevorzugt so erfolgen, dass die Spannvorrichtung 12 angezogen wird, bis allseitig am Abutment-Kragen 20 der Klebstoff sichtbar ist. In diesem Zustand ist bereits eine automatische Zentrierung und Klebespaltvergleichmäßigung erfolgt, und der Klebstoff kann dann in an sich bekannter Weise ausgehärtet werden, sei es durch Licht, sei es durch Wärme oder auch indem er selbsthärtend ist.

In vorteilhafter Ausgestaltung ist es vorgesehen, dass, um das Austreten von Klebstoff an dem Abutmenthals 22 zu blockieren, ein Füllkörper als Klebe-Hilfselement in den Abutmenthals 22 einzuführen ist. Dieser sollte vor dem Einsetzten der Abutment-Schraube entfernt werden.

Es versteht sich, dass die Erfindung nicht auf das dargestellte Ausführungsbeispiel beschränkt ist. Beispielsweise ist es ohne Weiteres möglich, die Lage von Spannvorrichtung 12 und Hilfsvorrichtung 26 kinematisch zu vertauschen, also die Hilfsvorrichtung 26 dem Abutment 14 nahe, und die Spannvorrichtung 12 der Suprastruktur 16 nahe vorzusehen. Erfindungsgemäß wichtig ist jedenfalls die Höheneinstellbarkeit zwischen Spannvorrichtung und Hilfsvorrichtung.

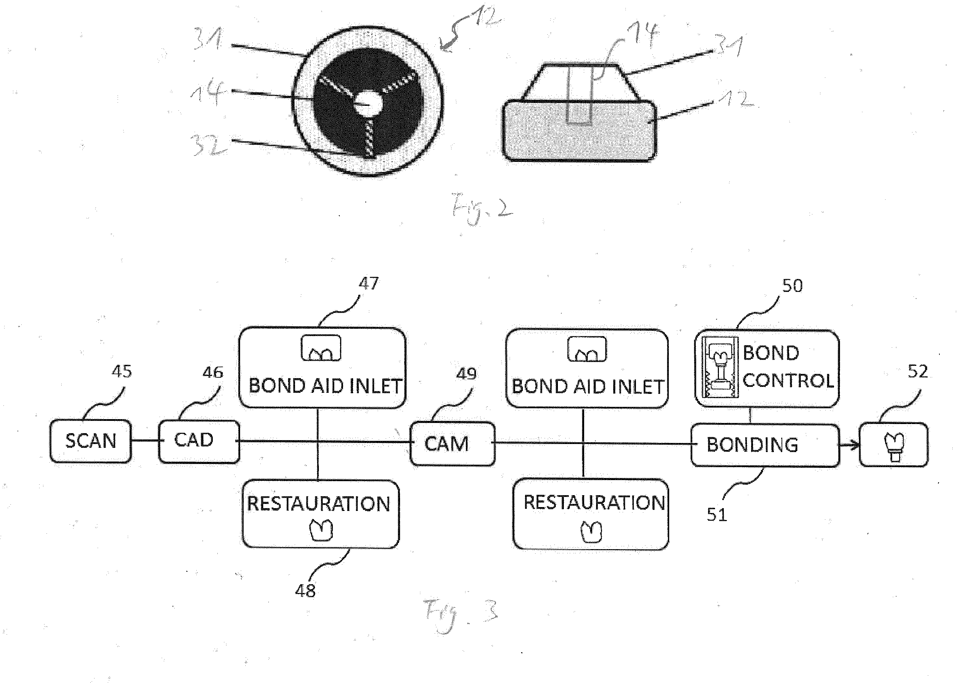

In der gemäß Fig. 2 dargestellten Ausführungsform wird das Abutment 14 durch ein Klemmfutter 31 der Spannvorrichtung 12 gespannt. Hierfür sind drei Klemmbacken 32 vorgesehen. Durch das Eindrehen der Klemmbacken 32 wird das Abutment 14 in an sich bekannter Weise geklemmt gehalten.

In einer nicht dargestellten Ausführungsform ist ein Implantatanalog als Abutmentaufnahme vorgesehen, das ebenfalls ein Sackloch für die Aufnahme des Abutments 14 aufweist. Eine Verdrehsicherung, die sich axial an der Innenseite des Sacklochs erstreckt, kann auch vorgesehen sein.

Gemäß Fig. 3 werden zunächst durch einen Scanprozess 45 digitale Daten des relevanten Zahnes erlangt. Es werden anschließend basierend hierauf mit einer CAD-Software 46 CAD-Daten bezüglich der herzustellenden Dentalrestauration 48 und einer individuellen Scheibe der Hilfsvorrichtung (also des Bond-Aid-Inlets 47) generiert.

Diese CAD-Daten dienen sowohl als Fertigungsauftrag für einen nachfolgenden additiven oder subtraktiven Herstellungsprozess 49, als auch als Voraussetzung für die mittels einer Simulationssoftware vorgenommene Berechnung der auf den Klebespalt 18 zwischen Suprastruktur 16 und Abutment 14 einwirkende, einzustellende Kraft bzw. des Höheneinstellwertes.

Anschließend wird mithilfe der erfindungsgemäßen Spannvorrichtung 12 und der erfindungsgemäßen Hilfsvorrichtung 26 mit der Scheibe 47 sowie dem Zugelement 28 der Klebeprozess 51 vorgenommen. Dies führt schließlich zu einer erfolgreichen Fertiggestellung der Anordnung aus Suprastruktur und Abutment.

## Patentansprüche

1. Vorrichtung zum Halten einer Anordnung, wobei die Anordnung aus einer Suprastruktur (16) und einem Abutment (14) besteht, mit einer Spannvorrichtung (12) für die Anordnung, wobei die Spannvorrichtung (12) gegenüber einer mit der Spannvorrichtung (12), dem Abutment (14) und/oder der Suprastruktur (16) verbundenen Hilfsvorrichtung (26) höheneinstellbar ist, **dadurch gekennzeichnet, dass** im Bereich der Hilfsvorrichtung (26) Vertiefungen (50, 51), in welche okklusale Vorsprünge wie Höcker oder Schneidekanten der Suprastruktur eintreten können und über welche Vertiefungen (50,51) eine Zentrierung erfolgt, vorgesehen sind, und die Anordnung zwischen der Hilfsvorrichtung (26) und der Spannvorrichtung (12) eingespannt haltbar ist und dass in der Hilfsvorrichtung ein Teil der Suprastruktur (16), nämlich eine Okklusal- und/oder Inzisalfläche der Suprastruktur (16) aufnehmbar ist.

2. Vorrichtung nach Anspruch 1, **dadurch gekennzeichnet, dass** die Höhenverstellung über ein Gewinde, das selbsthaltend und insbesondere als Feingewinde ausgebildet ist, realisierbar ist und/oder die Einstellung der Relativposition zwischen Hilfsvorrichtung (26) und Spannvorrichtung (12) über eine Feinrasterung vorgesehen ist.

3. Vorrichtung nach einem der vorhergehenden Ansprüche, **dadurch gekennzeichnet, dass** die Spannvorrichtung (12) und Hilfsvorrichtung (26) ein- oder mehrteilig ausgestaltet ist.

4. Vorrichtung nach einem der vorhergehenden Ansprüche, **dadurch gekennzeichnet, dass** die Spannvorrichtung (12) eine Ausnehmung, insbesondere ein Sackloch, für die Aufnahme des Abutments (14) aufweist, das insbesondere an die Länge und/oder Stärke des unteren Teils des Abutments (14) oder eines Implantatanalogs, angepasst ist.

5. Vorrichtung nach Anspruch 4, **dadurch gekennzeichnet, dass** die Ausnehmung ein Sackloch ist und das Sackloch einen Durchmesser hat, der dem Durchmesser des größten in der Praxis vorkommenden Durchmessers des Abutments oder eines Implantatanalogs entspricht, und dass mindestens ein Distanzring vorgesehen ist, mit welchem ein Durchmesserunterschied zwischen dem Abutment (14) oder eines Implantatanalogs und dem Sackloch ausgleichbar ist.

6. Vorrichtung nach einem der vorhergehenden Ansprüche, **dadurch gekennzeichnet, dass** die Vorrichtung (10) mindestens ein Zugelement (28) aufweist, das sich zwischen der Hilfsvorrichtung (26) und der Spannvorrichtung (12) erstreckt.

7. Vorrichtung nach einem der vorhergehenden Ansprüche, **dadurch gekennzeichnet, dass** über die Einstellung der Spannvorrichtung (12), die auf den Klebespalt (18) zwischen Suprastruktur (16) und Abutment (14) einwirkende Kraft eingestellt wird, insbesondere aufgrund der elastischen Verformung der Hilfsvorrichtung (26), oder mindestens eines Bestandteils der Hilfsvorrichtung (26).

8. Vorrichtung nach einem der vorhergehenden Ansprüche, **dadurch gekennzeichnet, dass** die Einstellung die relative Höhenlage von Hilfsvorrichtung (26) und Spannvorrichtung (12) zueinander betrifft.

9. Vorrichtung nach einem der vorhergehenden Ansprüche, **dadurch gekennzeichnet, dass** die Anordnung aus Suprastruktur (16) und Abutment (14) während der Einspannung zwischen Hilfsvorrichtung (26) und Spannvorrichtung (12) seitlich zugänglich ist und insbesondere der Klebespalt (18) visuell überprüfbar ist.

## Claims

1. A device for holding an arrangement, the arrangement comprising a suprastructure (16) and an abutment (14), and having a clamping device (12) for the arrangement, the clamping device (12) being adjustable in height in relation to an auxiliary device (26) connected to the clamping device (12), the abutment (14) and/or the suprastructure (16), **characterized in that**, in the region of the auxiliary device (26), depressions (50, 51) are provided in which occlusal projections such as cusps or cutting edges of the suprastructure (16) can enter, and via which depressions (50, 51) centering is effected, and the arrangement can be held clamped between the auxiliary device (26) and the clamping device (12), and **in that** part of the suprastructure (16), namely an occlusal and/or incisal surface of the suprastructure (16), is receivable in the auxiliary device.

2. The device according to claim 1, **characterized in that** height adjustment may be realized via a thread which is self-retaining and especially is designed as a fine thread, and/or adjustment of relative position between the auxiliary device (26) and the clamping device (12) is provided via a fine tuning.

3. The device according to one of the preceding claims, **characterized in that** the clamping device (12) and auxiliary device (26) are designed in one or more parts.

4. The device according to one of the preceding claims, **characterized in that** the clamping device (12) has a recess, especially a blind hole for receiving the abutment (14), which is adapted especially to the length and/or thickness of the bottom part of the abutment (14) or of an implant analog.

5. The device according to claim 4, **characterized in that** the recess is a blind hole and the blind hole has a diameter which corresponds to the diameter of the largest diameter occurring in practice of the abutment (14) or an implant analog, and **in that** at least one spacer ring is provided which is used for a difference in diameter between the abutment (14) or of an implant analog and the blind hole to be compensated.

6. The device according to one of the preceding claims, **characterized in that** the device (10) has at least one traction element (28) which extends between the auxiliary device (26) and the clamping device (12).

7. The device according to one of the preceding claims, **characterized in that** the force acting on the adhesive gap (18) between suprastructure (16) and abutment (14) is adjusted by adjusting the clamping device (12), especially due to elastic deformation of the auxiliary device (26), or at least one component of the auxiliary device (26).

8. The device according to one of the preceding claims, **characterized in that** adjustment concerns the relative height position of the auxiliary device (26) and the clamping device (12).

9. The device according to one of the preceding claims, **characterized in that** the arrangement consisting of the suprastructure (16) and the abutment (14) is laterally accessible when being clamped between the auxiliary device (26) and the clamping device (12), and especially the adhesive gap (18) is visually checkable.

## Revendications

1. Dispositif de maintien d'un agencement, composé d'une superstructure (16) et d'un pilier (14), muni d'un dispositif de serrage (12) pour l'appareillage, où le dispositif de serrage (12) est réglable en hauteur par rapport à un dispositif auxiliaire (26) relié au dispositif de serrage (12), au pilier (14) et/ou à la superstructure (16), des creux (50, 51) sont prévus dans la zone du dispositif auxiliaire (26), dans lesquels peuvent pénétrer des saillies occlusales telles que des cuspides ou des bords incisifs de la superstructure et par lesquels s'effectue le centrage des creux (50, 51), et l'agencement peut être maintenu serré entre le dispositif auxiliaire (26) et le dispositif de serrage (12), et en ce qu'une partie de la superstructure (16), à savoir une surface occlusale et/ou incisive de la superstructure (16), peut être logée dans le dispositif auxiliaire.

2. Dispositif selon la revendication 1, **caractérisé en ce que** le réglage en hauteur peut être réalisé au moyen d'un filetage qui est auto-retenu et, en particulier, est conçu comme un filetage fin, et/ou le réglage de la position relative entre le dispositif auxiliaire (26) et le dispositif de serrage (12) est assuré au moyen d'un crantage fin.

3. Dispositif selon l'une des revendications précédentes, **caractérisé en ce que** le dispositif de serrage (12) et le dispositif auxiliaire (26) sont conçus en une ou plusieurs parties.

4. Dispositif selon l'une des revendications précédentes, **caractérisé en ce que** le dispositif de serrage (12) présente un évidement, en particulier un trou borgne, pour recevoir le pilier (14), qui est adapté en particulier à la longueur et/ou à l'épaisseur de la partie inférieure du pilier (14) ou d'un analogue d'implant.

5. Dispositif selon la revendication 4, **caractérisé en ce que** l'évidement est un trou borgne et le trou borgne présente un diamètre qui correspond au diamètre du plus grand diamètre du pilier ou d'un analogue d'implant qui se produit dans la pratique, et qu'au moins une bague d'écartement est prévue, avec laquelle une différence de diamètre entre le pilier (14) ou un analogue d'implant et le trou borgne peut être compensée.

6. Dispositif selon l'une des revendications précédentes, **caractérisé en ce que** le dispositif (10) comprend au moins un élément de traction (28) qui s'étend entre le dispositif auxiliaire (26) et le dispositif de serrage (12).

7. Dispositif selon l'une des revendications précédentes, **caractérisé en ce que** la force agissant sur la fente de collage (18) entre la superstructure (16) et le pilier (14) est réglée par le réglage du dispositif de tension (12), en particulier sur la base de la déformation élastique du dispositif auxiliaire (26) ou d'au moins un composant du dispositif auxiliaire (26).

8. Dispositif selon l'une des revendications précédentes, **caractérisé en ce que** le réglage concerne la position en hauteur relative du dispositif auxiliaire (26) et du dispositif de tension (12) l'un par rapport à l'autre.

9. Dispositif selon l'une des revendications précédentes, **caractérisé en ce que** la disposition de la superstructure (16) et du pilier (14) est accessible latéralement lors du serrage entre le dispositif auxiliaire (26) et le dispositif de serrage (12) et, en particulier, la fente de collage (18) peut être inspectée visuellement.
